# EUROPÄISCHE PATENTSCHRIFT

(11) **EP 0 579 930 B1**
(45) Veröffentlichungstag und Bekanntmachung des Hinweises auf die Patenterteilung: **28.08.1996**
(21) Anmeldenummer: 93108476.8
(22) Anmeldetag: 26.05.1993
(51) Int. Cl.: F16C 13/00

(54) **Walze**
Roll
Rouleau

(30) Priorität: 18.07.1992 DE 4223715
(43) Veröffentlichungstag der Anmeldung: 26.01.1994
(73) Patentinhaber: Voith Sulzer Papiermaschinen GmbH, 89509 Heidenheim (DE)
(72) Erfinder: Link, Christoph, Dipl.-Ing., W-7987 Weingarten (DE)

(56) Entgegenhaltungen:
- EP-A- 0 340 192
- EP-A- 0 340 193
- DE-A- 3 525 950
- DE-C- 3 925 019
- FR-A- 2 297 683
- GB-A- 2 011 555
- GB-A- 2 136 091
- GB-A- 2 178 510

## Beschreibung

Die Erfindung betrifft eine Walze der im Oberbegriff des Anspruchs 1 beschriebenen Art. Derartige Walzen finden insbesondere bei der Herstellung oder Behandlung von Materialbahnen Anwendung.

Beispielsweise wird in der DE-A- 35 25 950 eine Walze mit Stützelementen beschrieben, deren Walzenmantel aus Schichten aufgebaut ist, die unterschiedliche physikalische Eigenschaften aufweisen. Wegen der hydrostatischen Schmierung der Stützelemente ist der Raum zwischen dem Träger und dem Walzenmantel zumindest teilweise mit einem Schmiermittel gefüllt. Vor allem wegen der hohen Bahngeschwindigkeiten verbraucht die Verwirbelung des Schmiermittels durch die nicht umlaufenden Stützelemente einen erheblichen Anteil der Antriebsleistung, was zu einer Erwärmung desselben führt. Besonders nachteilig wirkt sich dies bei Walzen aus, die eine relativ kalte Oberfläche aufweisen müssen oder bei denen das Material des Walzenmantels bzw. einer Walzenmantelschicht eine Erwärmung nicht verträgt.

An Bedeutung gewinnen diese Zusammenhänge noch, wenn bei der Verwendung von flexiblen Walzenmänteln oder bei hohen Anpreßdrücken die Abstände zwischen den Stützelementen verringert werden müssen und somit eine zusätzliche Verwirbelung des Schmiermittels erfolgt. Begegnet wird dem durch eine Kühlung des Schmiermittels außerhalb der Walze, was natürlich energetisch von Nachteil ist.

Der Erfindung liegt daher die Aufgabe zugrunde, die unerwünschten Verwirbelungsverluste bei Walzen zu verringern.

Erfindungsgemäß wurde die Aufgabe durch die im Anspruch 1 beschriebene Vorrichtung gelöst, wobei die Unteransprüche besondere Ausführungsformen darstellen. Dadurch, daß möglichst jedes Wirkelement mindestens einen etwa in Umfangsrichtung der Walze verlaufenden Kanal besitzt, erhöht sich die Zahl sowie der Gesamtquerschnitt der Strömungswege, was mit einer Verringerung der Verwirbelung verbunden ist. Dabei ist es durchaus möglich, daß Teile der Kanalbegrenzung ausgespart sind. Falls die Kanäle in einem Winkel zur Umfangsrichtung der Walze liegen und/oder zu einem Walzenende hin gekrümmt verlaufen, bietet sich zusätzlich die Möglichkeit, die Flüssigkeit zu den meist seitlich angeordneten Abführeinrichtungen zu leiten.

Vor allem wenn nur ein Teil des Zwischenraumes mit Flüssigkeit gefüllt ist, sollten sich die Kanäle in der Nähe des Walzenmantels befinden. Außerdem ist dort die Strömungsgeschwindigkeit am größten. Der Strömungswiderstand und damit auch die Verwirbelung können dabei verringert werden, wenn zumindest ein Teil der zum Walzenmantel gerichteten Kanalbegrenzung durch ein vorzugsweises flexibles, am Wirkelement befestigtes Verlängerungsteil über die jeweilige Kanalöffnung hinaus bis zur berührenden Führung an oder mit minimalem Abstand zu der Innenseite des Walzenmantels verlängert ist.

Die Erfindung soll nachfolgend an vier Ausführungsbeispielen näher erläutert werden, wobei die Begriffe "axial" und "radial" immer auf die Walze bezogen sind. In der beigefügten Zeichnung zeigt:
- Fig. 1:: die Draufsicht auf die radial nach außen gerichtete Fläche 9 eines Wirkelementes 3 der ersten Ausführungsform;
- Fig. 2:: einen Schnitt A-A gemäß Fig. 1;
- Fig. 3:: die Draufsicht auf die radial nach außen gerichtete Fläche 9 eines Wirkelementes 3 der zweiten Ausführungsform;
- Fig. 4:: einen Schnitt B-B gemäß Fig. 3;
- Fig. 5:: einen axial verlaufenden Schnitt eines Wirkelementes 3 der dritten Ausführungsform und
- Fig. 6:: die Draufsicht auf die radial nach außen gerichtete Fläche 9 eines Wirkelementes 3 der vierten Ausführungsform.

Gemeinsam ist allen Ausführungsbeispielen, daß der Walzenmantel 1 rotierbar um einen feststehenden Träger 2 angeordnet und mittels mehrerer Wirkelemente 3 in Form hydrostatischer Stützelemente, wie sie beispielsweise aus der CH-A- 541 088 bekannt sind, darauf gelagert ist. Die dabei anfallende Schmierflüssigkeit sammelt sich im Raum 4 zwischen dem Walzenmantel 1 und dem Träger 2 und wird im allgemeinen über Öffnungen im Träger 2 abgeführt.

Um die durch die Wirkelemente 3 verursachten Verwirbelungsverluste der Flüssigkeit zu verringern, führen durch jedes Wirkelement 3 mehrere, etwa in Umfangsrichtung U der Walze verlaufende Kanäle 5. Diese befinden sich in der Nähe des Walzenmantels 1, im Wirkelementekopf 6.

Die Wirkelemente 3 sind über ihren Wirkelementefuß 10 gleitend in je einer Ausnehmung 11 des Trägers 2 geführt, wobei in der Ausnehmung 11 zwischen dem Träger 2 und dem Wirkelementefuß 10 ein Druckraum 12 vorhanden ist, in den eine Druckflüssigkeitsleitung 13 mündet. Die radial nach außen gerichtete Fläche 9 des Wirkelementekopfes 6 besitzt mehrere hydrostatische Lagertaschen 14, die mit dem Druckraum 12 über jeweils eine Bohrung 15 verbunden sind.

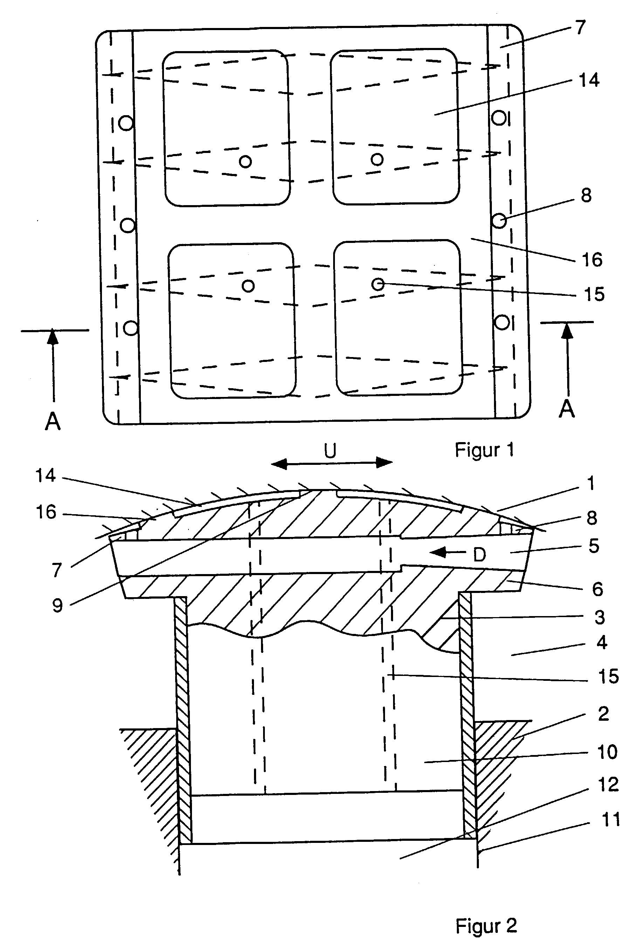

Bei den in den Fig. 1 bis 5 dargestellten ersten drei Ausführungsformen verlaufen die Kanäle 5 in Umfangsrichtung U der Walze. Dabei ist im ersten Ausführungsbeispiel der Wirkelementekopf 6 über die Umrandung 16 der Lagertaschen 14 hinaus in Umfangsrichtung U verlängert, so daß die Kanalöffnung weitestgehend an der Innenseite des Walzenmantels 1 liegt. Um einen Druckaufbau zwischen dem Walzenmantel 1 und diesem Verlängerungsteil 7 zu verhindern, weist dieser mehrere Durchbrüche 8 zum Inneren der Walze auf. Des weiteren vergrößert sich, wie in Fig. 2 zu sehen, der Querschnitt des Kanals 5 in Drehrichtung D der Walze sprunghaft. Dies kann bei Walzen, deren Drehrichtung D festgelegt ist, zur Anwendung kommen und führt dazu, daß sich die Reibung der Flüssigkeit an der Kanalwand sowie der Strömungswiderstand verringern.

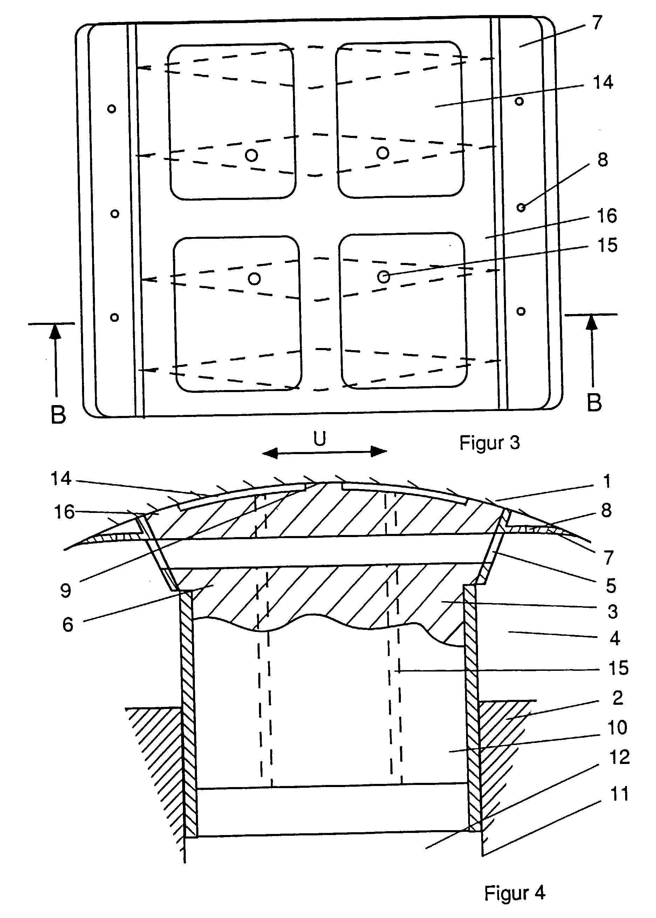

Fig. 3 und 4 zeigen das zweite Ausführungsbeispiel, wobei lediglich die zum Walzenmantel 1 gerichtete Kanalbegrenzung durch ein flexibles, am Wirkelement 3 befestigtes Verlängerungsteil 7 über die jeweilige Kanalöffnung hinaus bis zur berührenden Führung an oder mit minimalem Abstand zu der Innenseite des Walzenmantels 1 verlängert ist. Auch hier weist das Verlängerungsteil 7 Durchbrüche 8 zum Innern der Walze auf.

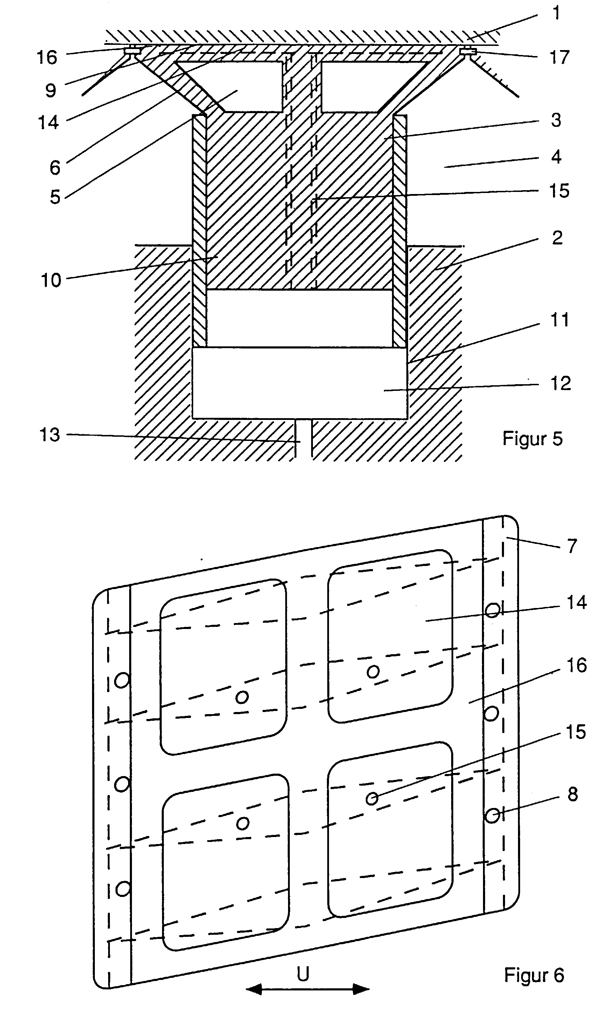

Die in Fig. 5 dargestellte dritte Ausführungsform verweist auf die Möglichkeit, die Strömungswege zwischen den Wirkelementen 3 zu vergrößern, indem die axiale Breite der Wirkelementköpfe 6 in der Nähe des Walzenmantels 1 zum Träger 2 hin stetig abnimmt. Außerdem sind die in Umfangsrichtung U der Walze verlaufenden Seitenflächen der Wirkelementköpfe 6 im radial äußersten Bereich derart eng zusammengeführt, daß sie über eine Dichtung 17 in Verbindung stehen. Dies vermindert den Ölabfluß über diese Seitenflächen und trägt somit zur Verringerung der Pumpleistung bei. Eine Kombination mit anderen Ausführungsformen ist dabei ohne Schwierigkeiten möglich.

Das in Fig. 6 gezeigte vierte Ausführungsbeispiel unterscheidet sich von der ersten Ausführungsform gemäß Fig. 1 und 2 dadurch, daß die radial nach außen gerichtete Fläche 9 des Wirkelementkopfes 6 die Form eines Parallelogrammes hat, wobei zwei Seitenflächen in axialer Richtung und die anderen zwei schräg zur Umfangsrichtung U der Walze verlaufen. Dies hat insbesondere bei der Verwendung von flexiblen Walzenmänteln 1 Vorteile, da dies zu einer Vergleichmäßigung des Anpreßdruckes entlang der Walze im Hinblick auf die Drucksenken zwischen den Wirkelementen 3 führt. Nicht nur auf diese Wirkelementekopfform beschränkt sind die in einem Winkel von maximal etwa 25 Grad zur Umfangsrichtung U der Walze verlaufenden Kanäle 5. Sie unterstützen die Zuführung der Flüssigkeit zu den meist an den Walzenenden vorhandenen Ölabführeinrichtungen. Dasselbe gilt bei der Verwendung von gekrümmt verlaufenden Kanälen 5.

Die Erfindung ist natürlich nicht auf die Anwendung bei hydrostatischen Stützelementen begrenzt, so ist beispielsweise auch der Einsatz bei hydrodynamischen Stützquellen (EP-A- 0 248 738) sowie Wirkelementen 3, die in Bezug auf den Umgebungsdruck innerhalb der Walze einen positiven oder negativen Druck auf den Walzenmantel 1 ausüben (DE-C- 38 20 974), möglich. Des weiteren kann der Walzenmantel 1 natürlich auch die Form eines flexiblen Preßschlauches (EP-A-0 309 530) o.ä. haben.

## Patentansprüche

1. Walze mit einem Walzenmantel (1), der rotierbar auf einem feststehenden Träger (2) gelagert ist, wobei zwischen dem Walzenmantel (1) und dem Träger (2) mindestens ein annähernd feststehendes Wirkelement (3) angeordnet und der Raum (4) zwischen dem Träger (2) und dem Walzenmantel (1) zumindest teilweise mit einer Flüssigkeit gefüllt ist,
**dadurch gekennzeichnet,**
daß durch den radial außen liegenden Wirkelementekopf (6) des Wirkelementes (3) hindurch mindestens ein etwa in Umfangsrichtung (U) der Walze verlaufender, den Gesamtquerschnitt der Strömungswege der Flüssigkeit wesentlich vergrößernder und einen geringen Strömungswiderstand aufweisender Kanal (5) führt.

2. Walze nach Anspruch 1,
**dadurch gekennzeichnet,**
daß der Kanal (5) in Umfangsrichtung (U) der Walze verläuft.

3. Walze nach Anspruch 1,
**dadurch gekennzeichnet,**
daß der Kanal (5) in einem Winkel von maximal 25 Grad zur Umfangsrichtung (U) der Walze liegt.

4. Walze nach Anspruch 1,
**dadurch gekennzeichnet,**
daß der Kanal (5) zu einem Walzenende hin gekrümmt verläuft.

5. Walze nach einem der Anspürüche 1 bis 4,
**dadurch gekennzeichnet,**
daß zumindest ein Teil der zum Walzenmantel (1) gerichteten Kanalbegrenzung durch ein vorzugsweise flexibles, am Wirkelement (3) befestigtes Verlängerungsteil (7) über die jeweilige Kanalöffnung hinaus bis zur berührenden Führung an oder mit minimalem Abstand zu der Innenseite des Walzenmantels (1) verlängert ist.

6. Walze nach Anspruch 5,
**dadurch gekennzeichnet,**
daß das Verlängerungsteil (7) Durchbrüche (8) aufweist.

7. Walze nach einem der Ansprüche 1 bis 6,
**dadurch gekennzeichnet,**
daß die axiale Breite der Wirkelementeköpfe (6) zum Träger (2) hin vorzugsweise stetig abnimmt.

8. Walze nach einem der Ansprüche 1 bis 7,
**dadurch gekennzeichnet,**
daß sich der Querschnitt des Kanales (5) in der Drehrichtung (D) sprunghaft vergrößert.

9. Walze nach einem der Ansprüche 1 bis 8,
**dadurch gekennzeichnet,**
daß die radial nach außen gerichtete Fläche (9) des Wirkelementekopfes (6) eine rechteckige Form hat.

10. Walze nach einem der Ansprüche 1 bis 8,
**dadurch gekennzeichnet,**
daß die radial nach außen gerichtete Fläche (9) die Form eines Parallelogrammes besitzt, wobei zwei Seitenflächen in axialer Richtung und die anderen zwei schräg zur Umfangsrichtung (U) der Walze verlaufen.

11. Walze nach einem der Ansprüche 1 bis 10,
**dadurch gekennzeichnet,**
daß sich die etwa in Umfangsrichtung (U) der Walze verlaufenden Seitenflächen der Wirkelementeköpfe (6) im radial äußersten Bereich zumindest beinahe berühren und vorzugsweise über eine Dichtung (17) verbunden sind.

## Claims

1. A roller comprising a roller sleeve (1) which is mounted rotatably on a stationary support (2), at least one almost stationary active member (3) being arranged between the roller sleeve (1) and the support (2) and the space (4) between the support (2) and the roller sleeve (1) being at least partially filled with a fluid, characterized in that at least one channel (5) extending approximately in the circumferential direction (U) of the roller, enlarging substantially the overall cross section of the flow paths of the fluid and exhibiting low flow resistance passes through the radially outwardly arranged head (6) of the active member (3).

2. A roller according to claim 1, characterized in that the channel (5) extends in the circumferential direction (U) of the roller.

3. A roller according to claim 1, characterized in that the channel (5) lies at an angle of at most 25 degrees to the circumferential direction (U) of the roller.

4. A roller according to claim 1, characterized in that the channel (5) extends in curved manner towards one roller end.

5. A roller according to any one of claims 1 to 4, characterized in that at least part of the channel boundary directed towards the roller sleeve (1) is extended beyond the respective channel opening by a preferably flexible extension portion (7) attached to the active member (3) until it is guided by contact with or until it reaches a minimal distance with respect to the inside of the roller sleeve (1).

6. A roller according to claim 5, characterized in that the extension portion (7) comprises apertures (8).

7. A roller according to any one of claims 1 to 6, characterized in that the axial width of the active member heads (6) decreases preferably constantly towards the support (2).

8. A roller according to any one of claims 1 to 7, characterized in that the cross section of the channel (5) is enlarged discontinuously in the direction of rotation (D).

9. A roller according to any one of claims 1 to 8, characterized in that the radially outwardly directed face (9) of the active member head (6) is rectangular in form.

10. A roller according to any one of claims 1 to 8, characterized in that the radially outwardly directed face (9) is in the form of a parallelogram, two side faces extending in the axial direction and the other two extending at an angle to the circumferential direction (U) of the roller.

11. A roller according to any one of claims 1 to 10, characterized in that the side faces of the active member heads (6) extending approximately in the circumferential direction (U) of the roller come at least almost into contact in the radially outermost area and are preferably connected by a seal (17).

## Revendications

1. Rouleau avec un bandage (1), qui est monté tournant sur un support (2) fixe, un élément d'action (3) approximativement fixe étant placé entre le bandage (1) et le support (2), l'espace (4) compris entre le support (2) et le bandage (1) étant au moins partiellement rempli d'un liquide, caractérisé en ce qu'au moins un canal (5) traverse la tête (6) située radialement à l'extérieur de l'élément d'action (3), ce canal s'étendant à peu près dans la direction périphérique (U) du rouleau, augmentant sensiblement la section totale des parcours d'écoulement du liquide et présentant une faible résistance à l'écoulement.

2. Rouleau selon la revendication 1, caractérisé en ce que le canal (5) s'étend dans la direction périphérique (U) du rouleau.

3. Rouleau selon la revendication 1, caractérisé en ce que le canal (5) se situe dans un angle de 25 degrés au maximum par rapport à la direction périphérique (U) du rouleau.

4. Rouleau selon la revendication 1, caractérisé en ce que le canal (5) est cintré vers une extrémité du rouleau.

5. Rouleau selon l'une des revendications 1 à 4, caractérisé en ce qu'au moins une partie de la délimitation du canal, dirigée vers le bandage (1) du rouleau, est prolongée par un élément de prolongement (7), de préférence flexible, fixé sur l'élément d'action (3), au-delà de l'ouverture de canal correspondante jusqu'au guidage de contact ou avec une distance minimale par rapport au côté intérieur du bandage (1) du rouleau.

6. Rouleau selon la revendication 5, caractérisé en ce que l'élément de prolongement (7) présente des ajours (8).

7. Rouleau selon l'une des revendications 1 à 6, caractérisé en ce que la largeur axiale des têtes (6) des éléments d'action diminue de préférence en continu vers le support (2).

8. Rouleau selon l'une des revendications 1 à 7, caractérisé en ce que la section transversale du canal (5) augmente brusquement dans le sens de rotation (D).

9. Rouleau selon l'une des revendications 1 à 8, caractérisé en ce que la surface (9), dirigée radialement vers l'extérieur de la tête (6) de l'élément d'action, présente une forme rectangulaire.

10. Rouleau selon l'une des revendications 1 à 8, caractérisé en ce que la surface (9), dirigée radialement vers l'extérieur, a la forme d'un parallélogramme, deux faces latérales s'étendant dans la direction axiale et les deux autres s'étendant obliquement par rapport à la direction périphérique (U) du rouleau.

11. Rouleau selon l'une des revendications 1 à 10, caractérisé en ce que les faces latérales, s'étendant à peu près dans la direction périphérique du rouleau, des têtes (6) des éléments d'action, se touchent au moins presque dans la zone radialement la plus extérieure et sont reliées de préférence par une étanchéité (7).
